Europäisches Patentamt

(19) European Patent Office

Office européen des brevets

(11) Publication number: **0 018 725**

**A1**

(12) # EUROPEAN PATENT APPLICATION

(21) Application number: **80301036.2**

(51) Int. Cl.³: **B 62 D 5/06**

(22) Date of filing: **02.04.80**

(30) Priority: **02.05.79 GB 7915309**

(43) Date of publication of application:
**12.11.80 Bulletin 80/23**

(84) Designated Contracting States:
**DE FR GB IT NL SE**

(71) Applicant: **CAM GEARS Limited**
**45, Wilbury Way Hitchin**
**Hertfordshire SG4 0TU(GB)**

(72) Inventor: **Adams, Frederick John**
**"Pelba" 27 Princes Road**
**Clevedon Avon(GB)**

(74) Representative: **Walters, Frederick James et al,**
**URQUHART-DYKES & LORD 11th Floor St. Martin's**
**House 140 Tottenham Court Road**
**London W1P 0JN(GB)**

(54) **A steering system.**

(57) Displacement of the valve part (20) from its neutral condition in one sense opens communication between feed line (24) and line (25) to subject piston chamber (16) to fluid pressure while piston chamber (17) is exhausted by way of line (26) and line (27) as valve part (21) remains in the condition shown. Displacement of the valve part (20) in the opposite sense opens line (26) to fluid pressure in feed line (24) and line (25) to exhaust at the return line (27); spool (32) is thus subjected to a fluid pressure differential causing it to be displaced rightwardly in the Figure to close communication between lines (30 and 25) and open communication between lines (30 and 26) so that both chambers (16 and 17) are subjected to fluid at the same pressure causing the piston (10) to be displaced rightwardly in the Figure while fluid in the piston chamber (16) is displaced by way of line (30), valve part (21) in line (26) into piston chamber (17).

EP 0 018 725 A1

./...

FIG.1A.

FIG.1B.

- 1 -

## DESCRIPTION

This invention relates to a steering system.

More particularly the invention concerns steering systems having power assistance means in the form of double acting piston and cylinder devices in which relative movement between the piston and its cylinder by the application of fluid under pressure thereto (usually hydraulic fluid) is applied to an output element of the steering system to provide assistance which is consistent with the manual steering input to the system. Generally the cylinder in which the piston is axially displaceable is mounted to be stationary while the piston is coupled through a piston rod and other appropriate linkage to assist in movement of the output of the steering system. In a steering system which incorporates a double acting piston and cylinder power assistance means it is generally desirable that the rate of displacement between the piston and its cylinder is the same in either sense of direction when the two piston chambers of the device are subjected alternatively to the same pressure and exhaust parameters. This desirable arrangement is easily achieved provided that the piston has opposed piston faces with the same effective pressurised areas (for example where piston rods of the same area extend from opposite sides of the piston through the cylinder). Occasionally however it is desirable, especially to provide the facility of shortening the overall length of the piston and cylinder device to arrange for a single piston rod to extend through the cylinder from one side of the piston where it will be apparent that (for a uniformly cylindrical piston) the opposed effective pressurised areas of the piston faces will be different unless the piston is of a relatively complicated stepped diameter form in a correspondingly stepped bore cylinder. In such circumstances where different effective pressurised areas are provided to the piston faces it has hitherto been proposed to maintain the rate of piston displacement substantially the same in either sense of direction by appropriately controlling the relative fluid pressures which are applied to the different piston chambers. This latter control has hitherto been effected through relatively complicated and expensive valve arrangements such as that disclosed in U.K. Patent Specification No. 1,289,861. It is an object of the present invention to provide a steering system having power assistance means in the form of a double acting piston and cylinder device in which the piston has opposed piston faces with different effective pressurised areas and in which a relatively uncomplicated and inexpensive valve arrangement is provided by which the rate of relative displacement between the piston and its cylinder can be determined in either sense of direction (preferably so that such rates are substantially the same) and by which the steering system can include a self-centering facility.

According to the present invention there is provided a steering system having power assistance means comprising a double acting piston and cylinder device in which the piston has opposed piston faces with different effective pressurised areas, the piston face with the smaller effective area communicating with a first piston chamber and the piston face of the larger effective area communicating with a second piston chamber; valve means which is adjustable from a neutral condition and in response to a steering manoeuvre to direct fluid under pressure from a pressure source to actuate the power assistance means; adjustment of said valve means from its neutral condition in response to a steering manoeuvre in one sense serving to direct fluid pressure to the first piston chamber and to direct fluid in the second piston chamber to exhaust so that relative movement in one direction is effected between the piston and cylinder, and adjustment of said valve means from its neutral condition in response to a steering manoeuvre in the opposite sense serving to direct fluid pressure to both piston chambers so that relative movement in the opposite direction is effected between the piston and cylinder, and wherein the valve means in its neutral condition opens communication between both piston chambers and exhaust.

In the system of the present invention it will be apparent that displacement of the piston in said one sense is effected in the conventional manner of a double acting piston and cylinder device whereby the first piston chamber is pressurised while the second piston chamber is exhausted. However, displacement of the piston in the opposite sense is effected by subjecting both the first and second piston chambers to fluid under the same pressure so that the piston is subjected to a pressure differential due to the different effective pressurised areas of the opposed piston faces. By appropriate selection of the differential pressurised areas of the piston faces it will be apparent that a required ratio can be achieved between the relative rates of displacement of the piston in one and the opposite senses. Preferably however the effective pressurised area of the larger piston face is approximately twice that of the effective pressurised area of the smaller piston face so that the rates of displacement of the piston in one and the opposite senses will be the same provided that the fluid is maintained at substantially constant pressure.

To alleviate fluid pressure pulsing in the system it is preferred that, when the valve means is adjusted in response to a steering manoeuvre in the aforementioned opposite sense, the valve means provides communication between both piston chambers whereby fluid is displaced from the second piston chamber into the first piston chamber. By this arrangement and when the area of the larger piston face is approximately twice that of the smaller piston face substantially the same fluid flow from the pressure source is required to actuate the piston and cylinder device when the piston is being displaced in either one or the opposite senses.

- 5 -

A particular and advantageous feature of the present invention is that the valve means, when in its neutral condition, opens communication between the piston chambers and exhaust. By this arrangement and irrespective of the fact that power assistance is provided when required for a steering manoeuvre, the steering gear can be arranged to permit self-centering in conventional manner whereby the steerable road wheels of, for example, a motor car are automatically caused to be centralised when the vehicle is mobile and in the absence of a steering force being applied to those wheels through the steering system. Advantageously for the purposes of construction and installation, the valve means is preferably located at a position remote from the piston and its cylinder (albeit that the valve means may be mounted on or incorporated within the housing which defines the piston cylinder). The valve means can comprise a valve element which is adjustable to control fluid flow to and from the piston and cylinder device and which valve element is mechanically linked to be adjustable directly in response to a steering manoeuvre.

- 6 -

For example, the valve means may comprise a rotationally adjustable or axially adjustable element adjustment of which is effected by relative rotation between two components (one of which may be the valve element) linked together by a torque rod as is well known in the art of power assisted steering gears.   Alternatively, the valve means can comprise a first valve part which is mechanically linked to be adjustable directly in response to a steering manoeuvre (for example as in a conventional power assisted steering gear which incorporates a torque rod as aforementioned) to direct fluid under pressure from the pressure source alternatively to the first piston chamber or to the second piston chamber as required and a second valve part which is responsive to fluid pressure in the second piston chamber and which controls communication between the first piston chamber and fluid under pressure: in this latter arrangement the valve means can be arranged so that when the first valve part directs fluid pressure to the first piston chamber that fluid pressure communicates with the first piston chamber through the second valve part and the second piston chamber communicates with exhaust through the first valve part, and when the first valve part directs fluid pressure to the second piston chamber, the second valve part reacts in response to that pressure to open communication between the first piston chamber and fluid pressure.   Desirably the second valve part is biased to a condition in which the first piston chamber is normally closed to communication with the second piston chamber. In a preferred arrangement fluid flow through the second valve part is controlled by a spring biased spool which is slidable in a spool cylinder and is displaceable against its spring biasing by fluid pressure which is applied to the spool from the second piston chamber.

Embodiments of power assisted steering systems constructed in accordance with the present invention will now be described, by way of example only, with reference to the accompanying illustrative drawings, in which:-

Figures 1A and 1B together schematically illustrate a first embodiment in which fluid flow to the power assistance means is controlled by a first valve part which is mechanically linked to be adjustable directly in response to a steering manoeuvre and a second valve part which is responsive to fluid pressure variations in the system;

Figure 2 schematically illustrates a second embodiment in which fluid flow to the power assistance means is controlled wholly by a valve which is mechanically linked to be adjustable directly in response to a steering manoeuvre, and

Figure 3 shows a modified form of the system in Figure 2.

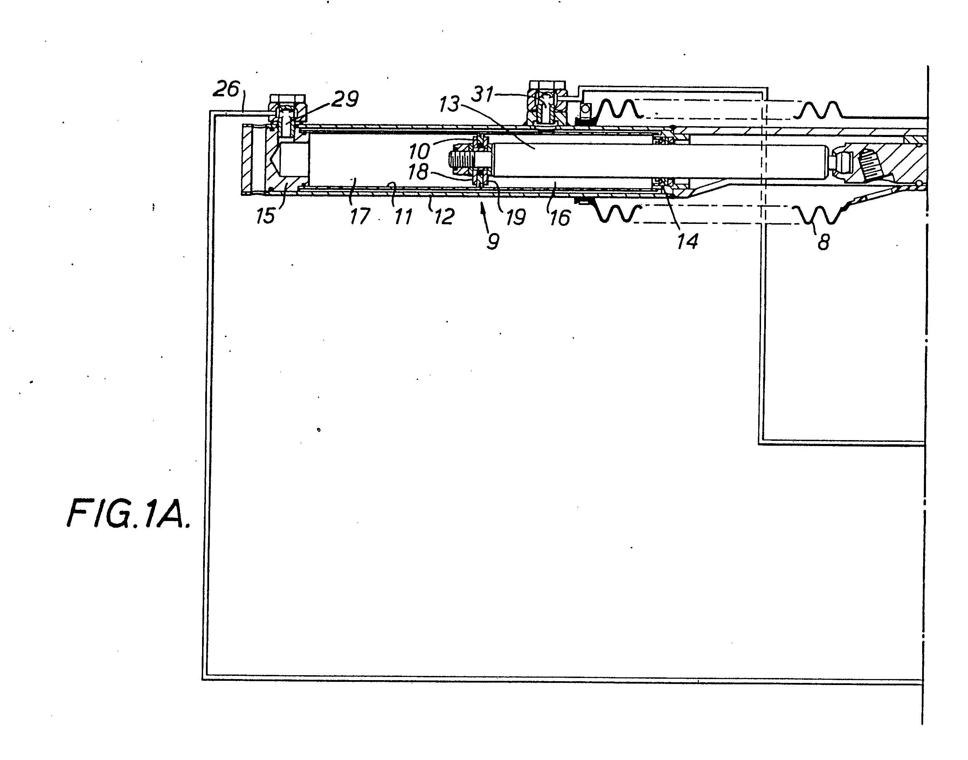

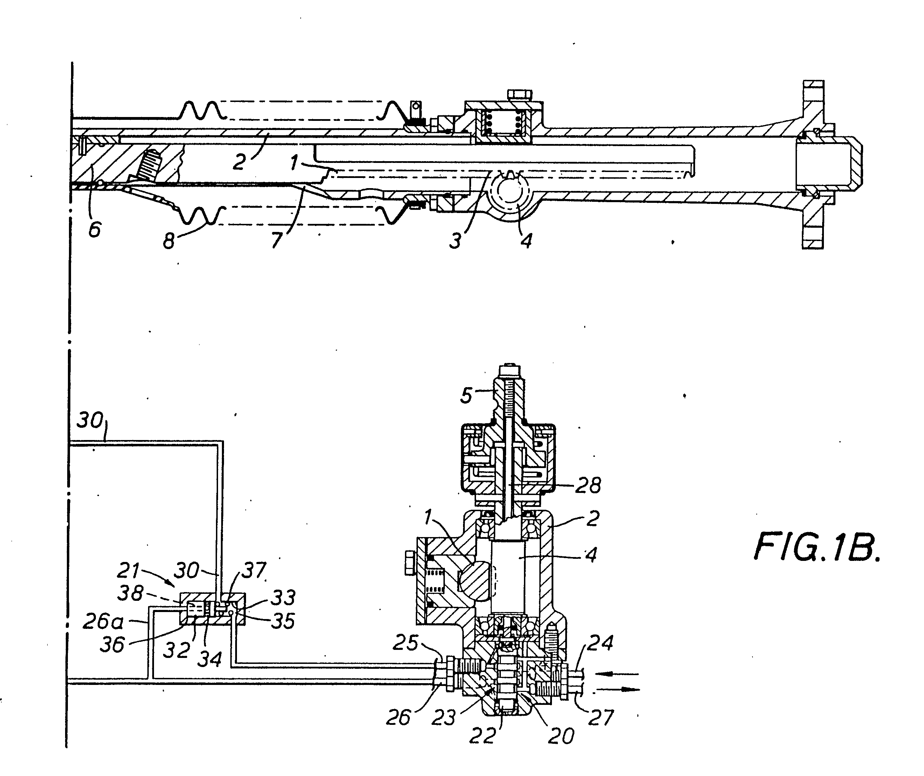

The steering system in Figures 1A and 1B is of the rack and pinion kind and has a rack bar 1 longitudinally displaceable through a rack bar housing 2. Engaging with the teeth 3 of the rack bar is a pinion 4 rotation of which effects in longitudinal displacement of the rack bar in conventional manner. The pinion 4 is rotated in response to rotation of an input shaft 5 which is mechanically linked to a driver's steering component. An output from the steering system is derived from a side take-off region 6 on the rack bar 1 which is to be mechanically coupled as appropriate to a steering linkage for steerable road wheels of a vehicle to which the gear is fitted. The region 6 is displaceable along an aperture 7 in the rack bar housing but is sealed relative to the housing by bellows 8. Associated with the rack bar 1 is power assistance means shown generally at 9 comprising a double acting piston and cylinder device. The piston 10 of the power assistance device is longitudinally slidable in its cylinder 11 which cylinder is formed by a longitudinal extension 12 of the housing 2. Connected at one end to the piston 10 and at the other end to the rack bar 1 is a piston rod 13 which is longitudinally slidable through a sealed bearing 14. The seal 14 closes one end of the cylinder 11 while the other end is closed by a plug 15. Formed between the piston 10 and seal 14 is a first piston chamber 16; a second piston chamber 17 is formed between the piston 10 and the plug 15. Because of the presence of the piston rod 13, the piston 10 has opposed piston faces 18 and 19 with different effective pressurised areas. The piston face 18 communicates with the chamber 17 and extends over the full bore of the cylinder 11 to have the largest effective area while the piston face 19 communicates with the chamber 16 and has the smaller effective area corresponding to the annulus formed between the bore of the cylinder 11 and the surface of the piston rod 13. The effective pressurised area of the piston face 18 is arranged to be twice the effective pressurised area of the piston face 19.

Control of hydraulic fluid under pressure to and from the piston and cylinder device 9 to provide power assistance to movement of the rack bar 1 is by valve means comprising a first valve part 20 and a second valve part 21 (both of which valve parts are located at positions remote from the piston 10 and its cylinder 11). The valve part 20 comprises a spool 22 axial displacement of which controls the opening and closing of ports shown generally at 23. More particularly, the spool 22 and ports 23 control the flow of hydraulic fluid under pressure from a feed line 24 (which communicates with the output of an engine driven pump (not shown)) to either a control line 25 for the first piston chamber 16 or a control line 26 for the second piston chamber 17. Additionally, the valve part 20 controls communication between the lines 25 and 26 and a return line 27 which communicates with exhaust or a fluid reservoir. Axial displacement of the spool 22 is effected in a known manner for power assisted steering gears whereby the input shaft 5 is mounted for rotation relative to the pinion 4 and is linked to the pinion by a torque rod 28. Upon relative rotation between the input shaft 5 and the pinion 4 in one sense or the opposite sense corresponding to the direction in which a steering manoeuvre is to be effected there is a corresponding axial displacement of the spool 22 in one or the opposite senses, such axial displacement of the spool 22 being effected in known manner (for example by relative displacement between co-operating inclined faces of a component which is rotatable with the input shaft. Examples of the manner in which the spool 22 is axially displaceable in a torsionally coupled pinion and input shaft of a rack and pinion gear are disclosed in our U.K. Patents Nos. 1,380,360 and 1,531,726.

The valve part 20 has a neutral condition (as shown in Figure 1B in which it is closed centre to the feed line 24 (so it is desirable that the feed line includes an accumulator) and, in which it is open return to both lines 25 and 26 whereby these lines (and thereby the piston chambers 16 and 17) communicate with the return line 27. During a steering manoeuvre in one sense the spool 22 will be displaced upwardly. in Figure 1B relative to the housing 2 so that line 25 is closed to communication with the return line 27 and open to communication with the feed line 24 and thereby fluid pressure while communication is maintained between the line 26 and and the return line 27.

A steering manoeuvre in the opposite sense will cause the spool 22 to be displaced downwardly in the Figure from its neutral condition and thereby close line 26 to communication with the return line 27 and open it to communication with fluid pressure in the feed line 24 while communication is maintained between the line 25 and the return line 27.

The line 26 is in constant communication with the piston chamber 17 by way of a port 29. The line 25 communicates with the piston chamber 16 by way of the second valve part 21 and a line 30 from that valve part which is in constant communication with the piston chamber 16 by way of a port 31. The valve part 21 comprises a spool 32 axially displaceable in a spool cylinder 33 to open and close communication between the line 30 and an annular recess 34 in the spool 32. The spool 32 forms with its cylinder at one end thereof a spool chamber 35 which is in constant communication with the line 25 and at the other end thereof a spool chamber 36 which is in constant communication with a branch line 26a from the line 26. A spring 37 in the spool chamber 35 biases the spool 32 to an end condition in which the spool chamber 36 is contracted and the line 30 communicates with the spool chamber 35. Located in the spool 32 is an internal passage 38 which provides constant communication between the annular recess 34 and the spool chamber 36.

It will be apparent that the valve part 20 is of generally conventional arrangement while the valve part 21 is of a relatively simple and inexpensive structure and easily incorporated within the steering system. In operation of the system and with the valve part 20 in its neutral condition as illustrated in Figure 1B both lines 25 and 26 and therefore the piston chambers are open to exhaust while the valve part 21 is maintained by its spring biasing in the condition as shown. Upon displacement of the spool 22 from its neutral condition to direct fluid pressure to the line 25 while the line 26 is open to the return line 27, the valve part 21 is maintained in the condition illustrated so that fluid under pressure is directed by way of line 25, spool chamber 35 and line 30 to the piston chamber 16 while the piston chamber 17 is exhausted by way of line 26 so that the piston is displaced leftwardly in the Figure 1A to provide assistance to displacement of the rack bar 1 consistent with the direction in which the rack bar is being driven by rotation of the input shaft 5. When a steering manoeuvre is effected to displace the spool 22 downwardly in Figure 1 from its neutral condition fluid pressure from the line 24 is directed to the line 26 and therethrough to the piston chamber 17. As the line 26, its branch line 26a and thereby the spool chamber 36 are pressurised, the line 25 and thereby the spool chamber 35 are exhausted so that the spool 32 is subjected to a fluid pressure differential which displaces it rightwardly in Figure 1B against the biasing of spring 37. During such rightward movement the annular recess 34' opens to communication with the line 30 so that line 30 communicates with line 26a through passage 38. In this latter condition the piston chamber 16 communicates with the piston chamber 17 so that both these chambers communicate with the source of fluid under pressure and are thereby subjected to fluid at substantially the same pressure. With equal fluid pressure in both chambers 16 and 17 the piston 10 is driven rightwardly in Figure 1A due to the pressure differential to which it is subjected. During movement of the piston 10 rightwardly in Figure 1A hydraulic fluid from the piston chamber 16 is displaced by way of lines 30, 26a and 26 into piston chamber 17. Since the piston face 18 is twice the area of piston face 19, the force acting to displace the piston rightwardly in Figure 1A is equal to the force which acts on the piston to displace it leftwardly as above described and consequently the rate of displacement of the piston and thereby the rack bar 1 is, all things being equal, substantially the same in both senses of direction. Furthermore, because of the two to one ratio between the areas of piston faces 18 and 19 and the communication which is provided between the piston chambers 16 and 17, the volume of hydraulic fluid required from the pressure source to the piston chamber 17 for displacing the piston a unit length is substantially equal to the volume of fluid required from the pressure source to the piston chamber 16 to displace the piston leftwardly in Figure 1A through the same unit length; by this technique it.will be realised that substantial pulsing is alleviated in the hydraulic system.

In the absence of steering force or steering torque being applied to the shaft 5, the valve part 20 will revert to its neutral condition and thereby open communication between the piston chambers 16, 17 and exhaust. The effect of this latter communication is that the steering system is permitted to exhibit self-centering provided that the mechanics of the system are of a geometry which is intended to provide self-centering as is well known in the steering art.

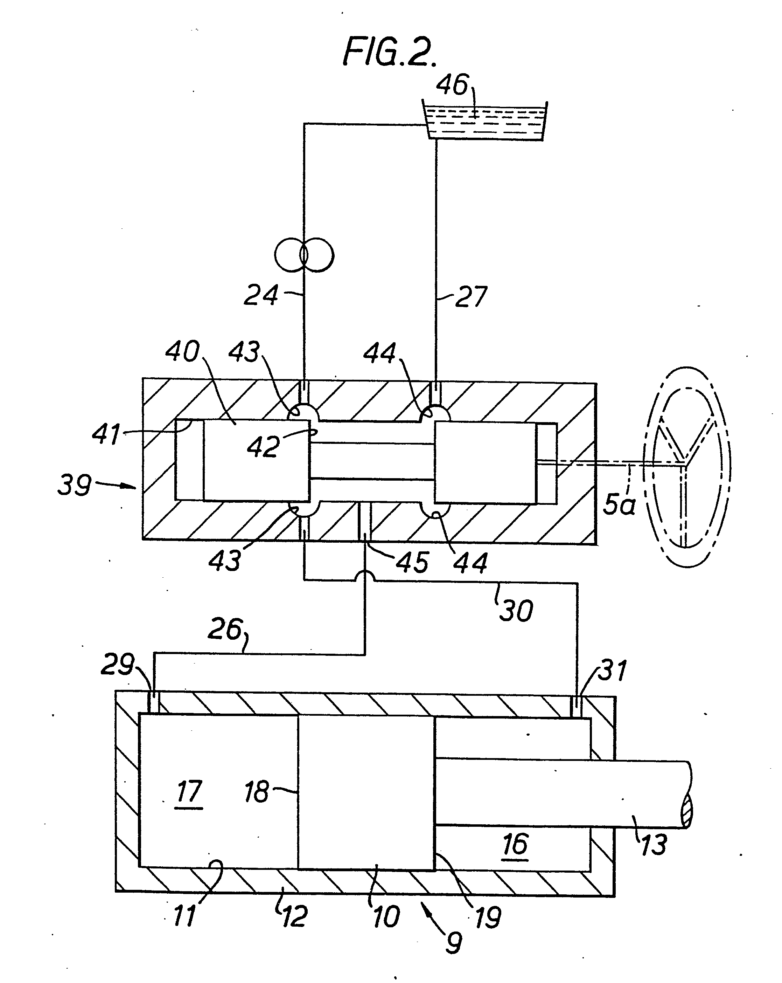

In the embodiment of Figure 2 the steering system has a single valve 39 comprising a spool 40 which is axially displaceable in a spool cylinder 41. The spool 40 is mechanically linked (as indicated at 5a) to be responsive to a steering input so that it is axially displaced from its neutral condition (as shown in Figure 2) in one or the opposite senses when a steering manoeuvre is effected in one or the opposite directions respectively. Conveniently the spool 40 is arranged to be responsive to a steering input and is incorporated as part of a torsionally responsive steering gear similar to the spool 22 as above described with reference to Figures 1A and 1B.

The valve 39 has a neutral condition in which it is open centre to the fluid pressure feed line 24 and open return to the piston chambers 16 and 17 so permitting the facility for self-centering as previously described. More particularly the spool 40 has an annular recess 42 and in its neutral condition both the feed line 24 and the return or exhaust line 27 communicate with the recess 42. More particularly, the feed line 24 opens into an annular recess 43 in the spool cylinder 41 while the return line 27 opens into an annular recess 44 in the spool cylinder 41. Communicating with the recess 43 is the line 30 to the piston chamber 16. The line 26 to the piston chamber 17 is in constant communication with the recess 42 by way of a port 45. In the neutral condition as shown, the valve 39 is open centre to the feed line 24 whereby fluid pressure returns to the reservoir 46; in addition the valve is open return to both piston chambers 16 and 17 since recess 43 and port 45 communicate with the return line 27. When the spool 40 is displaced rightwardly in Figure 2 from its neutral condition the recess 42 and thereby the piston chamber 17 maintains communication with the return line 27 and thereby exhaust while recess 43 is closed to communication with the return line 27 but maintains its communication with the piston chamber 16 so that the piston is displaced leftwardly in Figure 2. Upon displacement of the spool 40 leftwardly from its neutral condition in Figure 2, the annular recess 44 and thereby the return line is closed to communication with the recess 42 while both lines 26 and 30 are subjected to fluid pressure from the feed line 24 so that both piston chambers 16 and 17 are subjected to the same pressure and thereby the piston 10 is subjected to a fluid pressure differential causing it to be displaced rightwardly in Figure 2 in a similar manner to the embodiment of Figures 1A & 1B. If required, for example for convenience of manufacture, the line 30 can by-pass the valve 39 and be connected to communicate directly with the fluid pressure feed line 24 (in which case the port would be omitted through which the line 30 communicates with the annular recess 43 as shown in Figure 2).

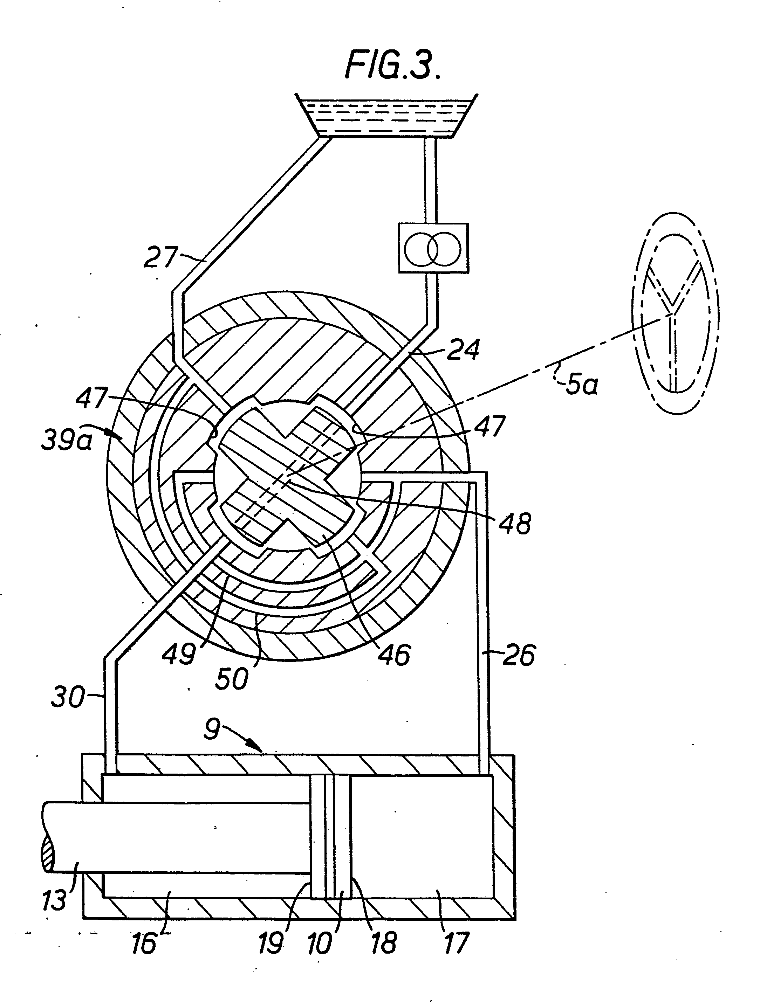

The system as above described with reference to Figure 2 can be modified by substituting a rotary valve for the linear valve 39; such a modification is shown in Figure 3 in which the valve means shown at 39a is open centre/open return (similarly to the valve 39) and has a spool element 46 which is linked at 5a to be rotatable from its neutral condition and in response to a steering input, such rotation being in one or the opposite sense of direction as appropriate for the steering manoeuvre which is effected. As will be apparent from Figure 3 the rotatable element 46 controls the communication between an annularly spaced array of ports 47 which communicate appropriately with the lines 24, 26, 27 and 30 in a similar manner and with the same effect as the control afforded by the valve 39 in Figure 2. In Figure 3 the rotatable element 46 is shown in its neutral condition whereby both piston chambers 16 and 17 and the feed line 24 communicate with the return line 27. Upon rotation of the element 46 clockwise from its neutral condition in Figure 3, line 30 is maintained in communication with fluid pressure in line 24 by way of an internal passage 48 in the element 46 while piston chamber 17 is exhausted and upon displacement of the element 46 anti-clockwise from its neutral condition in Figure 3 both piston chambers 16 and 17 are subjected to fluid pressure from line 24. It will be noted that internal passageways 49 and 50 are provided in the housing of the rotatable element 46 to give the required fluid communication and flow.

- 17 -

CLAIMS

1.    A steering system having power assistance means
comprising a double acting piston and cylinder device
in which the piston has opposed piston faces with
different effective pressurised areas, the piston face
with the smaller effective area communicating with a
first piston chamber and the piston face with the larger
effective area communicating with a second piston chamber;
valve means which is adjustable from a neutral condition
and in response to a steering manoeuvre to direct fluid
under pressure from a pressure source to actuate the
power assistance means;  adjustment of said valve means from
its neutral condition in response to a steering manoeuvre
in one sense serving to direct fluid pressure to the first
piston chamber and to direct fluid in the second piston
chamber to exhaust so that relative movement in one
direction is effected between the piston and cylinder,
and adjustment of said valve means from its neutral condition
in response to a steering manoeuvre in the opposite
sense serving to direct fluid pressure to both piston chambers so that relative movement in the opposite direction is effected between the piston and cylinder, and wherein the valve means in its neutral condition opens communication between both piston chambers and exhaust.

2. A steering system as claimed in claim 1 in which adjustment of the valve means in response to a steering manoeuvre in said opposite sense provides communication between both piston chambers so that fluid is displaced from the second piston chamber to the first piston chamber.

3. A steering system as claimed in either claim 1 or claim 2 in which the effective area of the larger piston face is substantially twice that of the effective area of the smaller piston face.

4. A steering system as claimed in any one of the preceding claims in which the valve means in its neutral condition opens communication between the source of fluid under pressure and exhaust.

5. A steering system as claimed in any one of the preceding claims in which the valve means comprises a valve element which controls fluid flow to and from the piston chambers and is mechanically linked to be adjustable directly in response to a steering manoeuvre.

6. A steering system as claimed in any one of claims 1 to 4 in which the valve means comprises a first valve part which is mechanically linked to be adjustable directly in response to a steering manoeuvre to direct fluid pressure from said source alternatively to the first piston chamber or to the second piston chamber, and a second valve part which is responsive to fluid pressure in the second piston chamber and which controls communication between the first piston chamber and fluid under pressure, said valve means being arranged so that when the first valve part directs fluid pressure to the first piston chamber said fluid pressure communicates with the first piston chamber through the second valve part and the second piston chamber communicates with exhaust through said first valve part, and when the first valve part directs fluid pressure to the second piston chamber, the second valve part reacts in response to that pressure to open communication between the first piston chamber and fluid pressure.

7. A steering system as claimed in claim 6 in which the second valve part is biased to a condition in which the first piston chamber is normally closed to communication with the second piston chamber.

8. A steering system as claimed in either claim 6 or claim 7 in which the second valve part comprises a spool slidable in a spool cylinder to control fluid flow to and from the first piston chamber, said spool being spring biased and displaceable against its spring biasing by fluid pressure which is applied thereto from the second piston chamber.

9. A steering system as claimed in any one of the preceding claims in which the valve means is located at a position remote from the piston and its cylinder.

FIG.1A.

FIG.1B.

# FIG.2.

FIG.3.

European Patent Office

**EUROPEAN SEARCH REPORT**

Application number

EP 80 30 1036.2

| Category | DOCUMENTS CONSIDERED TO BE RELEVANT | | CLASSIFICATION OF THE APPLICATION (Int. Cl.³) |
| --- | --- | --- | --- |
| | Citation of document with indication, where appropriate, of relevant passages | Relevant to claim | |
| X | GB - A - 1 487 315 (ZAHNRADFABRIK FRIEDRICHSHAFEN AG) <br> * claims; page 2, line 51 to page 3, line 5; fig. * <br> -- | 1-7,9 | B 62 D 5/06 |
| X | GB - A - 1 072 199 (S.A. ANDRE CITROËN) <br> * claims; fig. * <br> -- | 1-5 | |
| X | US - A - 2 906 361 (J.F. ZISKAL) <br> * claims; column 4, lines 20 to 53; fig. * <br> -- | 1-5 | **TECHNICAL FIELDS SEARCHED (Int.Cl.³)** <br><br> B 62 D 5/00 |
| A,D | GB - A - 1 289 861 (HOBOURN-EATON MANUFACTURING COMPANY LTD.) <br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
| --- | --- | --- |
| Berlin | 31-07-1980 | P. LEITZ |

EPO Form 1503.1 06.78